# DEMANDE DE BREVET EUROPEEN

(11) **EP 3 168 149 A1**
(43) Date de publication de la demande: **17.05.2017**
(21) Numéro de dépôt: 16197678.2
(22) Date de dépôt: 08.11.2016
(51) Int. Cl.: B64C 39/02

(54) **DRONE AYANT UN SUPPORT DE PROPULSION COUPLE**

(30) Priorité: 10.11.2015 FR 1560735
(71) Demandeur: Parrot Drones, 75010 Paris (FR)
(72) Inventeur: BABEL, Mathieu, 75011 PARIS (FR); MORRA, Flavien, 93500 Pantin (FR)
(74) Mandataire: Dupuis-Latour, Dominique

(57) **Abrégé**

L'invention concerne un drone à voilure tournante (10) comprenant un corps de drone (30) comprenant une carte électronique contrôlant le pilotage du drone, quatre bras de liaison (36) comprenant à leur extrémité un bloc propulseur (38), deux blocs propulseurs ayant une hélice (12) tournant dans le sens horaire et deux blocs propulseurs ayant une hélice tournant dans le sens antihoraire, les blocs propulseurs ayant des hélices de même sens de rotation étant placés sur la même diagonale. Le drone comprend un support de propulsion (32) comprenant les bras de liaison (36) et une âme centrale (34), deux paires de bras de liaison symétriques s'étendant chacune de part et d'autre de l'âme centrale, l'âme centrale (34) étant apte à être couplée sur le corps de drone (30), et le support de propulsion (32) présentant au moins une direction de flexion en torsion s'étendant dans le plan horizontal.

## Description

L'invention concerne les engins volants motorisés tels que les drones, notamment les drones à voilure tournante de type quadricoptère. L'*AR.Drone 2.0* ou le *Bebop Drone* de Parrot SA, Paris, France sont des drones à voilure tournante de type quadricoptère. Ils sont équipés d'une série de capteurs (accéléromètres, gyromètres 3 axes, altimètre) et peuvent comprendre au moins une caméra vidéo frontale captant une image de la scène vers laquelle est dirigé le drone. Ces drones sont pourvus de plusieurs rotors entrainés par des moteurs respectifs aptes à être commandés de manière différenciée afin de piloter le drone en attitude et en vitesse. Un tel drone à voiture tournante est également décrit dans le document EP 2 937 123.

Ces quadricoptères sont équipés de quatre blocs propulseurs munis chacun d'hélice. Les hélices de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale.

Chaque hélice exerce sur le drone une force de traction due à la portance de l'hélice, cette force de traction est dirigée vers le haut, et un moment qui est de sens opposé à son sens de rotation. En vol stationnaire, c'est-à-dire en maintien apparemment immobile en altitude et en attitude, les quatre hélices tournent à la même vitesse et les quatre forces de portance s'ajoutent et compensent le poids du drone. En ce qui concerne les moments des hélices, ces derniers s'annulent du fait des sens de rotation opposés des hélices.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Les commandes émises par le dispositif de pilotage sont au nombre de quatre, à savoir la rotation en roulis, c'est-à-dire le mouvement en rotation autour de son axe longitudinal, le tangage c'est-à-dire le mouvement de rotation autour de l'axe transversal, le cap aussi appelé lacet, c'est-à-dire la direction vers laquelle le drone est orienté, et l'accélération verticale.

Il a été observé que la mise en rotation du drone selon un cap ou le maintien d'un cap se traduit par une forte accélération des blocs propulseurs, notamment lors de perturbations par exemple lors de la présence de vent. Dans un tel cas, il n'est pas rare n'atteindre les limites des capacités des blocs propulseurs et donc d'avoir une perte du cap du drone.

En effet, lorsqu'une commande de cap est demandée au drone, les blocs propulseurs ayant des hélices tournant dans un sens tournent plus vite, c'est-à-dire une accélération des blocs propulseurs est réalisée alors que les deux autres blocs propulseurs tournent moins vite.

De la sorte, la somme des forces de portance compense le poids du drone mais la somme des moments n'est plus nulle et donc le drone tourne selon un cap. La rotation selon un cap du drone à droite ou à gauche dépend des deux blocs propulseurs en diagonale pour lesquels une accélération de leur rotation est demandée.

Si l'on considère l'efficacité d'une commande, il est observé que sur les drones quadricoptères tels que décrits, la commande de rotation selon un cap est moins efficace comparée aux commandes de roulis et de tangage. L'efficacité d'une commande peut être calculée en mesurant l'accélération angulaire générée sur le drone pour une vitesse fixe de rotation des hélices. L'efficacité est alors exprimée en radian par seconde carrée par rotation par minute (rad/s²/rpm).

Par exemple, l'efficacité des commandes mesurées sur un même drone indique que la commande de roulis présente une efficacité de 0,10 rad/s²/rpm, la commande de tangage présente une efficacité de 0,06 rad/s²/rpm alors que la commande de cap présente une efficacité de 0,0035 rad/s²/rpm. Ainsi, il est observé un facteur 20 entre l'efficacité du cap et les autres commandes.

Le manque d'efficacité de la commande de cap sur les drones repose sur des différences de couples et sur un fort coefficient de trainée de l'hélice. Ainsi, la réalisation du mouvement en cap du drone nécessite 20 fois plus de puissance sur les blocs propulseurs, notamment en terme de vitesse de rotation, que la même mise en mouvement sur l'axe de tangage ce qui implique que les blocs propulseurs sont très souvent à leur maximum lors de la mise en mouvement en cap du drone.

Une solution connue permettant d'améliorer l'efficacité de la commande en cap comprend une modification structurelle du châssis du drone, notamment par l'utilisation d'une forme appelée « VTail » à l'arrière du drone par rapport au déplacement principal de vol du drone. Le châssis est modifié de telle sorte que les deux hélices positionnées à l'arrière par rapport au déplacement principal du drone ne sont pas positionnées horizontalement mais présentent chacune un angle de 10 à 30° par rapport à l'horizontale, et les bras de liaison supportant les blocs propulseurs à leur extrémité forment un V.

Selon cette forme en V des bras supportant les blocs propulseurs, la poussée des hélices n'est plus verticale. Les hélices positionnées à l'arrière du drone produisant un flux d'air oblique, les commandes de rotation selon un cap se trouvent améliorées.

Pour un drone quadricoptère donné, la poussée et le couple générés par la trainée de l'hélice en régime moyen de vol, c'est-à-dire à 8.000 rotations par minute sont respectivement de 1,33 N et 13,3 mN.m.

En considérant un axe incliné d'un angle α par rapport à l'axe verticale du drone et une longueur des bras de liaison l, le couple généré en cap pour une poussée P est de :

Couple = P x l x sin(α)

Si l'angle α est de 10° et la longueur des bras de liaison est de 15 cm alors le couple généré en cap est de 34 mN.m. Ainsi, de par la création d'un angle de 10° des deux bras de liaison arrière du drone, le couple généré en cap par la poussée de l'hélice est près de 2,5 fois supérieur, comparé au couple généré par ces mêmes hélices en position horizontale. Ainsi, la contrôlabilité de la rotation selon un cap donné s'en trouve amélioré.

Toutefois, cette solution présente un inconvénient. En effet, lorsque le drone est en vol stationnaire, une partie de la poussée des hélices inclinées ne peut contrer le poids du drone. En effet, la somme des quatre forces de portance des hélices sur un tel drone est inférieure à la somme des quatre forces de portance des hélices lorsque les hélices sont sur un plan horizontal et donc les blocs propulseurs du drone, pour compenser le poids du celui-ci doivent tourner dans un régime de rotation plus élevé et donc l'autonomie du drone s'en trouve diminuée.

Le but de l'invention est de remédier à cet inconvénient, en proposant un drone permettant d'améliorer la contrôlabilité de celui-ci lors d'une commande en cap sans perdre d'autonomie.

A cet effet, l'invention propose un drone à voilure tournante comprenant un corps de drone comprenant une carte électronique contrôlant le pilotage du drone, quatre bras de liaison comprenant à leur extrémité un bloc propulseur, deux blocs propulseurs ayant une hélice tournant dans le sens horaire et deux blocs propulseurs ayant une hélice tournant dans le sens antihoraire, les blocs propulseurs ayant des hélices de même sens de rotation étant placés sur la même diagonale,

De façon caractéristique, le drone comprend un support de propulsion comprenant les bras de liaison et une âme centrale, deux paires de bras de liaison symétriques s'étendant chacune de part et d'autre de l'âme centrale, l'âme centrale étant apte à être couplée sur le corps de drone, et le support de propulsion présentant au moins une direction de flexion en torsion s'étendant dans le plan horizontal.

Selon diverses caractéristiques subsidiaires :
- l'âme centrale comprend un évidement.
- l'âme centrale a une forme allongée ayant une paire de bras à chaque extrémité et la direction de flexion en torsion est l'axe longitudinal de l'âme centrale.
- le support de propulsion comprend des moyens de couplage déformables, lesdits moyens de couplage déformables étant aptes à se fixer sur le corps de drone.
- les hélices des blocs propulseurs sont dans un plan sensiblement horizontal.
- la direction de flexion en torsion est l'axe principal de vol du drone.
- le support de propulsion est réalisé au moins partiellement en un matériau élastiquement déformable.
- le support de propulsion est apte à se déformer en torsion selon un angle compris entre 3 degrés et 10 degrés sous l'effet d'une valeur maximum prédéterminée d'une différence de poussée commandée entre les hélices d'une diagonale et les hélices de la seconde diagonale.
- l'aptitude de l'âme centrale à la torsion selon la direction de flexion est supérieure à l'aptitude des bras à la torsion selon la direction de flexion.

On va maintenant décrire un exemple de mise en oeuvre de la présente invention, en référence aux dessins annexés.
La Figure 1 est une vue d'ensemble montrant le drone et le dispositif de pilotage associé permettant son pilotage.
La Figure 2 est une vue détaillée du drone conformément à l'invention.
La Figure 3 est une vue détaillée du support de propulsion du drone conformément à l'invention.
La Figure 4 illustre la flexion en torsion du support de propulsion lors d'une commande de rotation selon un cap conformément à l'invention.
La Figure 5 représente la structure du drone en vol stationnaire.
La Figure 6 représente la structure du drone lors d'une commande de rotation selon un cap conformément à l'invention.

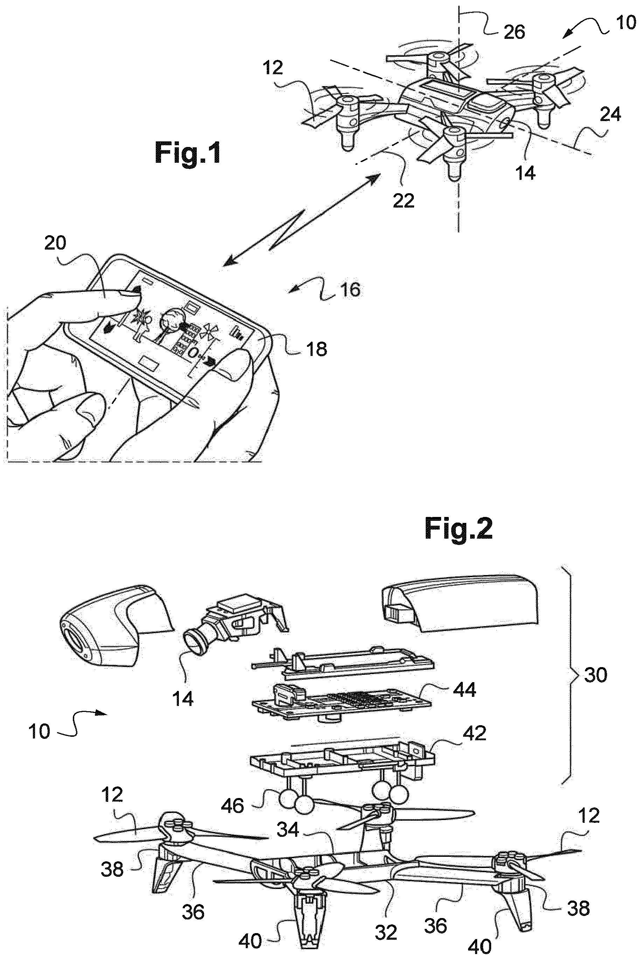

Nous allons maintenant décrire un exemple de réalisation de l'invention. Sur la Figure 1, la référence 10 désigne de façon générale un drone. Selon l'exemple illustré en Figure 1, il s'agit d'un drone de type quadricoptère tel que le modèle *Bebop Drone* de Parrot SA, Paris, France.

Le drone quadricoptère comporte quatre hélices coplanaires 12 dont les blocs propulseurs sont pilotés indépendamment par un système intégré de navigation et de contrôle d'attitude.

Pour cela, le drone quadricoptère est équipé de quatre blocs propulseurs munis chacun d'hélice 12. Les hélices de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale.

Le drone 10 comporte également une caméra à visée frontale 14 permettant d'obtenir une image de la scène vers laquelle est dirigé le drone. Le drone comporte également une caméra à visée verticale (non représentée) pointant vers le bas, apte à capter des images successives du terrain survolé et utilisée notamment pour évaluer la vitesse du drone par rapport au sol.

Selon un exemple de réalisation, le drone est muni de capteurs inertiels (accéléromètres et gyromètres) permettant de mesurer avec une certaine précision les vitesses angulaires et les angles d'attitude du drone, c'est-à-dire les angles d'Euler (tangage *ϕ*, roulis *θ* et cap *ψ*) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone fournit par ailleurs une mesure de l'altitude par rapport au sol.

Le drone 10 est piloté par un dispositif de pilotage 16 distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage 16.

Le dispositif de pilotage distant 16 est un appareil pourvu d'un écran tactile 18 affichant l'image captée par la caméra embarquée 14 du drone 10, avec en superposition un certain nombre de symboles permettant l'activation de commandes par simple contact du doigt 20 d'un utilisateur sur l'écran tactile 18.

Le dispositif de pilotage 16 communique avec le drone 10 via un échange bidirectionnel de données par liaison sans fil de type réseau local Wi-Fi (IEEE 802.11) ou Bluetooth (marques déposées) : du drone 10 vers le dispositif de pilotage 16 notamment pour la transmission de l'image captée par la caméra, et du dispositif de pilotage 16 vers le drone 10 pour l'envoi de commandes de pilotage.

Le pilotage du drone 10 consiste à faire évoluer celui-ci par :
a) rotation autour d'un axe de tangage 22, pour le faire avance ou reculer ; et/ou
b) rotation autour d'un axe de roulis 24, pour le déplacer vers la droite ou vers la gauche ; et/ou
c) rotation autour d'un axe de cap 26, pour faire pivoter vers la droite ou vers la gauche l'axe principal du drone, donc la direction de pointage de la caméra frontale et la direction de progression du drone ; et/ou
d) translation vers le bas 28 ou vers le haut 30 par changement du régime des gaz, de manière à respectivement réduire ou augmenter l'altitude du drone.

La mise en oeuvre sur le drone de la commande de rotation selon un cap est réalisée en faisant tourner légèrement plus vite un couple de blocs propulseurs dont les hélices tournent dans le même sens, et un peu moins vite le second couple de blocs propulseurs.

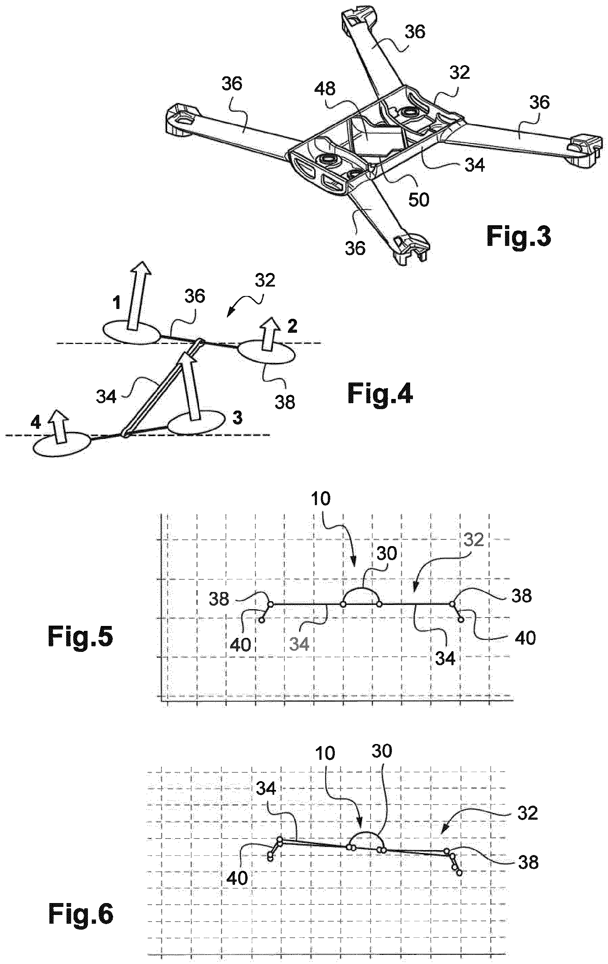

Afin d'améliorer l'efficacité de la commande de rotation selon un cap, la structure du drone est modifiée telle que décrite ci-après en référence aux figures 2 et 3.

Sur la Figure 2, on a représenté le drone 10, avec un corps de drone 30 et un support de propulsion 32.

Le support de propulsion 32 comprend une âme centrale 34 solidaire de quatre bras de liaison 36 rayonnant à partir de l'âme centrale 34. Chaque bras de liaison est équipé à son extrémité distale d'un bloc propulseur 38 comprenant un moteur entrainant en rotation une hélice 12. Deux blocs propulseurs ont une hélice tournant dans le sens horaire et deux blocs propulseurs ont une hélice tournant dans le sens antihoraire, les blocs propulseurs ayant des hélices de même sens de rotation étant placés sur la même diagonale.

En partie inférieure, le bloc propulseur 38 est prolongé par un support de drone 40 formant un pied sur lequel pourra reposer au sol le drone à l'arrêt.

Selon un autre mode de réalisation, le ou les supports de drone 40 sont fixés au support de propulsion 32, notamment sur l'âme centrale 34 ou sur les bras de liaison 36.

Conformément à l'invention, deux paires de bras de liaison 36 symétriques s'étendent chacune de part et d'autre de l'âme centrale 34.

Le corps de drone 30 comprend une platine 42 destinée à recevoir la carte électronique 44 portant la quasi-totalité des composants électroniques du drone, y compris la centrale inertielle de celui-ci et à recevoir des moyens de communication sans fil. La platine 42 se présente sous forme d'un élément monobloc en matériau métallique léger et fait fonction de refroidisseur pour évacuer les calories excédentaires de certains composants fortement générateurs de chaleur tels que le processeur principal, la puce radio, les MOSFETs de commutation des moteurs, etc. Conformément à l'invention, l'âme centrale 34 du support de propulsion 32 est apte à être couplée sur le corps de drone 30.

Selon un mode de réalisation particulier, le support de propulsion 32 comprend des moyens de couplage déformables 46, lesdits moyens de couplage déformables 46 étant aptes à se fixer sur le corps de drone 30. Les moyens de couplage déformables 46 sont par exemple des blocs en élastomère.

Tel qu'illustré en Figure 1 et en Figure 2, les hélices des blocs propulseurs sont dans un plan sensiblement horizontal.

La Figure 3 est une vue agrandie du support de propulsion 32 ayant une âme centrale 34 et deux paires de bras de liaison 36 symétriques s'étendant de part et d'autre de l'âme centrale 34.

Selon un mode de réalisation, l'âme centrale 34 a une forme allongée ayant une paire de bras à chaque extrémité. Selon ce mode de réalisation, la direction de flexion en torsion du support de propulsion 32 est l'axe longitudinal de l'âme centrale.

Selon un autre mode de réalisation, l'âme centrale 34 est de forme ronde ou carrée, autour de laquelle les bras de liaison 36 sont répartis.

Le support de propulsion 32 est notamment réalisé au moins partiellement en un matériau élastiquement déformable, notamment du polyamide par exemple du PA12, dans lequel on intègre de la fibre de verre, par exemple à 20%. La fibre de verre présente l'avantage d'alléger la structure du support de propulsion tout en renforçant la structure du support. De préférence, le module d'élasticité du matériau du support de propulsion est d'environ 3500 MPa.

Conformément à l'invention, le support de propulsion 32 présente au moins une direction de flexion en torsion s'étendant dans le plan horizontal. Cette déformation du support est particulièrement avantageuse lors de la mise en oeuvre d'une commande de rotation selon un cap et améliore l'efficacité de la commande de rotation selon un cap tout en évitant un impact sur l'autonomie du drone.

La Figure 4 illustre selon une représentation du support de propulsion 32 muni d'une âme centrale 34 et de quatre bras de liaison 36 ayant à leur extrémité distale un bloc de propulsion 38 la déformation du support de propulsion ayant lieu lors de la mise en oeuvre de la commande de rotation selon un cap.

La déformation de la structure du support de propulsion 32 a pour effet de désaxer les poussées des hélices des blocs propulseurs 38. Notamment, les poussées des hélices des différents blocs propulseurs ne sont plus verticales mais présentent un angle de sorte à créer des poussées obliques.

La déformation provoquée sur la structure du support de propulsion 32 est symétrique selon l'axe vertical central du support de propulsion.

Afin que la déformation de la structure du support de propulsion contribue à l'efficacité de la commande de rotation selon un cap, le sens de rotation des hélices des blocs propulseurs est déterminé de la manière suivante. Conformément à l'invention, une commande de rotation dans le sens horaire génère une déformation de la structure et se traduit par un accroissement de la vitesse de rotation des blocs propulseurs 1 et 3 et une diminution de la vitesse de rotation des blocs propulseurs 2 et 4 tels qu'illustré en Figure 3. Afin d'améliorer l'efficacité de la commande de rotation selon un cap, les hélices des blocs propulseurs 1 et 3 doivent tourner dans le sens antihoraire.

Dans le cas contraire, la déformation de la structure vient s'opposer au couple généré par la trainée des hélices et donc l'efficacité de la commande de rotation selon un cap est diminuée.

Selon l'invention, les quatre blocs propulseurs 38 du support de propulsion 32 contribuent à la mise en oeuvre de la commande de rotation selon un cap lorsque la structure se déforme améliorant ainsi l'efficacité de la commande sans réduire l'autonomie du drone.

Afin encore d'améliorer l'efficacité de la commande de rotation selon un cap, il est avantageux de faciliter la flexion en torsion du support de propulsion, notamment de l'âme centrale 34. Pour ce faire, l'âme centrale 34 peut présenter au moins un évidement 48 tel qu'illustré en figure 3.

De manière préférentielle, la direction de flexion en torsion que comprend le support de propulsion 32 est l'axe principal de vol du drone.

En outre, selon un mode de réalisation particulier, l'aptitude de l'âme centrale à la torsion selon la direction de flexion est supérieure à l'aptitude des bras à la torsion selon la direction de flexion.

Tel que montré en figure 3, lorsque l'âme centrale 34 présente un évidement 48 important en partie centrale, il peut être avantageux de renforcer la structure de l'âme centrale, notamment contre les chocs, par des éléments de renfort 50.

La figure 5 illustre le support de propulsion 32 du drone 10, notamment les quatre bras de liaison 36 ayant à leur extrémité distale un bloc propulseur 38 et sous le bloc propulseur un support de drone 40, en vol stationnaire vue de face. Il est observé que l'ensemble des bras de liaison 36 du support de propulsion du drone est sur un plan sensiblement horizontal.

Quant à la figure 6, il est illustré la déformation du support de propulsion 32 conformément à l'invention lors de la mise en oeuvre d'une commande de rotation selon un cap du drone.

Conformément à l'invention et selon un exemple de réalisation, le support de propulsion 32 est apte à se déformer en torsion selon un angle compris entre 3 degrés et 10 degrés sous l'effet d'une valeur maximum prédéterminée d'une différence de poussée commandée entre les hélices d'une diagonale et les hélices de la seconde diagonale.

Dans l'exemple de réalisation de la Figure 6, il a été observé un angle entre les bras de liaison 36 situés à l'avant du drone dans le sens de déplacement principal du drone et les bras de liaison 36 situés à l'arrière du drone de 4,7° environ.

L'efficacité de la commande de rotation selon un cap a été mesurée sur deux drones conformément à l'invention ayant un support de propulsion respectivement selon deux niveaux de rigidité.

L'efficacité de la commande de rotation selon un cap d'un premier drone conformément à l'invention a permis de montrer que lorsque le sens de rotation des hélices 1 et 3 tel qu'illustré en Figure 4 est le sens antihoraire, alors l'efficacité de la commande mesurée est de 0,004 rad/s²/rpm, et au contraire si les hélices sont montées dans le sens horaire, l'efficacité de la commande mesurée est de 0,003 rad/s²/rpm.

Un second test a été réalisé sur un second drone conformément à l'invention ayant un support de propulsion de plus faible rigidité comparé au premier drone. Ainsi, ce test a permis de montrer que lorsque le sens de rotation des hélices 1 et 3 tel qu'illustré en Figure 4 est le sens antihoraire, alors l'efficacité de la commande mesurée est de 0,005 rad/s²/rpm, et au contraire si les hélices sont montées dans le sens horaire, l'efficacité de la commande mesurée est de 0,002 rad/s²/rpm.

De la sorte, il est montré que l'efficacité de la commande de rotation selon un cap est améliorée, d'autant plus lorsque le support de propulsion présente un bon niveau de flexion en torsion dans le plan horizontal, notamment dans la direction du sens principal de vol du drone.

## Revendications

1. Drone à voilure tournante (10) comprenant
- un corps de drone (30) comprenant une carte électronique contrôlant le pilotage du drone,
- quatre bras de liaison (36) comprenant à leur extrémité un bloc propulseur (38), deux blocs propulseurs ayant une hélice (12) tournant dans le sens horaire et deux blocs propulseurs ayant une hélice tournant dans le sens antihoraire, les blocs propulseurs ayant des hélices de même sens de rotation étant placés sur la même diagonale,
**caractérisé en ce qu'**il comprend un support de propulsion (32) comprenant les bras de liaison (36) et une âme centrale (34), deux paires de bras de liaison symétriques s'étendant chacune de part et d'autre de l'âme centrale, l'âme centrale (34) étant apte à être couplée sur le corps de drone (30), et le support de propulsion (32) présentant au moins une direction de flexion en torsion s'étendant dans le plan horizontal.

2. Drone à voilure tournante selon la revendication précédente, **caractérisé en ce que** l'âme centrale comprend un évidement (48).

3. Drone à voilure tournante selon l'une quelconque des revendications précédentes, **caractérisé en ce que** l'âme centrale (34) a une forme allongée ayant une paire de bras à chaque extrémité et la direction de flexion en torsion est l'axe longitudinal de l'âme centrale.

4. Drone à voilure tournante selon l'une quelconque des revendications précédentes, **caractérisé en ce que** le support de propulsion (32) comprend des moyens de couplage déformables (46), lesdits moyens de couplage déformables étant aptes à se fixer sur le corps de drone.

5. Drone à voilure tournante selon l'une quelconque des revendications précédentes, **caractérisé en ce que** les hélices (12) des blocs propulseurs sont dans un plan sensiblement horizontal.

6. Drone à voilure tournante selon l'une quelconque des revendications précédentes, **caractérisé en ce que** la direction de flexion en torsion est l'axe principal de vol du drone.

7. Drone à voilure tournante selon l'une quelconque des revendications précédentes, **caractérisé en ce que** le support de propulsion (32) est réalisé au moins partiellement en un matériau élastiquement déformable.

8. Drone à voilure tournante selon l'une quelconque des revendications précédentes, **caractérisé en ce que** le support de propulsion est apte à se déformer en torsion selon un angle compris entre 3 degrés et 10 degrés sous l'effet d'une valeur maximum prédéterminée d'une différence de poussée commandée entre les hélices d'une diagonale et les hélices de la seconde diagonale.

9. Drone à voilure tournante selon l'une quelconque des revendications précédentes, **caractérisé en ce que** l'aptitude de l'âme centrale à la torsion selon la direction de flexion est supérieure à l'aptitude des bras à la torsion selon la direction de flexion.
